# EUROPÄISCHE PATENTSCHRIFT

(11) **EP 3 496 929 B1**
(45) Veröffentlichungstag und Bekanntmachung des Hinweises auf die Patenterteilung: **11.10.2023**
(21) Anmeldenummer: 17751717.4
(22) Anmeldetag: 09.08.2017
(51) Int. Cl.: B29C 48/285, B29C 48/25

(54) **VERFAHREN ZUR BESCHICKUNG EINES EXTRUDERS**
METHOD FOR CHARGING AN EXTRUDER
PROCÉDÉ DE CHARGEMENT D'UNE EXTRUDEUSE

(30) Priorität: 12.08.2016 DE 102016115050
(43) Veröffentlichungstag der Anmeldung: 19.06.2019
(73) Patentinhaber: TROESTER GmbH & Co. KG, 30519 Hannover (DE)
(72) Erfinder: PIELSTICKER, Bernd, 31515 Wunstorf (DE); HOFFMANN, Wieland, 30539 Hannover (DE); KAMENSKYY, Denys, 30880 Laatzen (DE)
(74) Vertreter: Scheffler, Jörg
(86) Internationale Anmeldenummer: PCT/EP2017/070148
(87) Internationale Veröffentlichungsnummer: WO 2018/029236

(56) Entgegenhaltungen:
- EP-A2- 0 374 082
- DE-A1- 1 961 632
- DE-A1- 2 250 542
- GB-A- 2 024 095
- JP-A- H09 174 654
- JP-A- 2004 262 194
- JP-U- S59 107 224

## Beschreibung

Die Erfindung betrifft ein Verfahren zur Beschickung mindestens eines Extruders mit mindestens einer Materialbahn, insbesondere aus Kautschuk- und/oder Kunststoffmischungen, wobei jeweils mittels eines Fördermittels die jeweilige Materialbahn, beabstandet zu mindestens einer Materialzuführung des jeweiligen Extruders, in den Bereich dieser Materialzuführung transportiert wird. Hierbei bilden zumindest der mindestens eine Extruder die jeweiligen Fördermittel sowie zumindest eine zumindest ein Werkzeug aufweisende Handhabungseinrichtung eine Fertigungsanlage.

Die Zufuhr von Material zu Extrudern, insbesondere Schneckenextrudern, erfolgt für gewöhnlich in der Form von Materialstreifen, wobei ein solcher Streifen mäanderförmig übereinandergeschlagen auf einer Palette vorliegend verarbeitet wird.

Solche auch als Felle bezeichneten Materialstreifen, welche charakteristischerweise aus Thermoplasten, thermoplastischen Elastomeren oder Kautschukmischungen respektive Naturkautschuk gebildet werden, werden mittels Transportbändern an den Extruder heran- und über eine meist trichterförmige Einspeiseöffnung dem Extruder zugeführt. Ein solches Vorgehen ist unter anderem in der DE 23 64 539 A1 beschrieben.

Das Einbringen eines solchen, mittels eines Transportbandes an den Extruder herangeführten Felles in die Einspeiseöffnung des Extruders erfolgt dabei per Hand, wobei ein Maschinenbediener das herangeführte Ende des Felles in die Einspeiseöffnung des Extruders einführt. Danach läuft das Fell, gegebenenfalls auch zwei oder mehrere Felle, bedingt durch die Förderwirkung der Schnecke weiter, bis die Palette entleert ist.

Aufgrund arbeitsschutztechnischer Bestimmungen muss, hinsichtlich der manuellen Zufuhr des Felles, die Einspeiseöffnung, in der Regel ein Trichterschacht, so ausgelegt sein, dass Körperteile des Maschinenbedieners, wie z. B. Finger oder Hand, nicht in den verarbeitenden Teil des Extruders, insbesondere die Schnecke, gelangen können.

Hierfür kann zum einen die Trichteröffnung so schmal gestaltet werden, dass sich ein Finger nicht einführen lässt. Da dies jedoch eine zum Einführen eines Felles überaus nachteilige Gestaltung darstellt, wird die Schachtlänge des Trichterschachtes so gewählt, dass Körperteile nicht bis zur Extruderschnecke gelangen können. Nichtsdestotrotz ist auch hierbei eine Begrenzung des Querschnittes notwendig, sodass z. B. nicht der gesamte Körper durch die Trichteröffnung in das Maschineninnere gelangen kann.

Aufgrund dieser Querschnittsbegrenzung ist eine Bearbeitung des in den Trichterschacht einzubringenden Endes eines Felles unabdingbar, da die Breite der Felle die Querschnittslänge und/oder -breite der Trichteröffnung für gewöhnlich überschreitet. Die Bearbeitung des einzuführenden Endes erfolgt dann so, dass das Ende unter anderem durch Anschneiden oder Einrollen möglichst spitz zuläuft, um ein einfaches Einführen zu gewährleisten.

Diese Tätigkeit muss beispielsweise stets dann erfolgen, wenn ein Fellende erreicht ist, ein Fell bedingt durch eine Querschnittsänderung, welche sich aufgrund des Produktionsprozesses des Felles ergibt, abreißt oder Fremdkörper im Fell entfernt werden müssen.

Zur Umgehung einer solch ausgestalteten Zuführung beschreibt die DE 38 41 752 C1 eine Anlage, wobei die auf Paletten angeordneten Felle vor der Zufuhr in den Trichterschacht eines Schneckenextruders zerkleinert werden und diese zerkleinerten Stücke einen Magnetsowie eine weitere Fremdkörperabscheidung durchlaufen. Hierdurch können Stücke, die mit Fremdkörpern verunreinigt sind, aussortiert werden. Vorzugsweise drei Felle werden dabei zunächst über Transportbänder einem Zerkleinerer zugeführt, wonach die zerkleinerten Fellstücke über ein weiteres Transportband entlang des Magnetabscheiders verlaufen. Ein hierzu zusätzliches Transportband führt die Stücke der Fremdkörperabscheidung sowie zuletzt dem Trichterschacht des Extruders zu. Es ist hierbei deutlich zu erkennen, welche Ausmaße eine solche Anlage annimmt - der Platzbedarf ist immens. Zudem ist es notwendig die Felle vor der Zufuhr zum Extruder in Stücke zu verkleinern.

Ferner wurden Anstrengungen unternommen, anders ausgestaltete Zuführungen zu realisieren. Aus der DE 27 46 187 B1 ist beispielsweise eine Vorrichtung zum gesteuerten Zuführen einer streifenförmigen Kautschukmischung in die Eingabeöffnung einer Schneckenmaschine mit einem zwischen einer Zuführeinrichtung und der Eingabeöffnung angeordneten trichterförmigen Einzugsschacht bekannt. Eine mit einem ständigen Kippmoment beaufschlagte Pendelklappe überdeckt den gesamten Durchtrittsquerschnitt des Einzugsschachtes. In dem rückwärtig aus dem Einzugsschacht ragenden Ende der Pendelklappe ist eine Schalteinrichtung zur Auslösung von Schaltimpulsen zur Steuerung der Zuführeinrichtung mittels feststehender Näherungsschalter vorgesehen. Nachteilig an einer solchen Realisierung ist jedoch erneut die aufwendige Zerteilung eines Felles in Fellabschnitte.

Der JP S59 107224 U lässt sich entnehmen, ein Fell über ein Förderband einem Schneidwerkzeug zuzuführen, wobei wiederum das gesamte Fell mittels des Schneidwerkzeugs in Fellabschnitte zerteilt wird. Diese Fellabschnitte werden anschließend über ein weiteres Förderband einer vorverarbeitenden Walzenanordnung und abschließend über ein von der Walzenanordnung wegführendes Förderband einem Extruder zugeführt.

Auch die DE 19 61 632 A1 offenbart, vergleichbar der JP S59 107224 U, ein Fell über eine Förderrolle einem Schneidwerkzeug (15) zuzuführen, wobei ebenfalls die gesamte Materialbahn in Fellabschnitte zerteilt wird. Anschließend werden die mittels des Schneidwerkzeugs abgetrennten Fellabschnitte des Fells schwerkraftbedingt unmittelbar oder über ein Förderband einem Extruder zugeführt.

Weiterhin ist der JP H09 174654 A zu entnehmen, einen Anfangsbereich eines Fells mittels eines einer Handhabungseinrichtung zugehörigen Werkzeugs, hierbei eines Schneidwerkzeugs einer Schneidvorrichtung zu beschneiden, um ein besseres Einbringen in einen Trichter eines Extruders zu ermöglichen. Hierbei umfasst die Handhabungseinrichtung die Schneidvorrichtung, eine Klemmvorrichtung mit einem Niederhalter und eine um ein Scharnier schwenkbare Führung, wobei das Schwenken über einen zugehörigen Zylinder durchgeführt wird. Zudem erfolgt die Zufuhr des Fells zum Trichter über ein Förderband in Kombination mit der Positionierung des Endes des Förderbands respektive einer Führung oberhalb des Trichters des Extruders. Dabei ist der Vorschub des Fells über das Förderband verwirklicht, wobei das eigentliche Einbringen des Fells in den Trichter schwerkraftbedingt erfolgt.

Vor diesem Hintergrund liegt der Erfindung die Aufgabe zugrunde, eine Möglichkeit zu schaffen, eine automatisierte Zufuhr von Materialbahnen in einen Extruder zu realisieren, ohne dass eine Zerkleinerung der Materialbahnen notwendig ist.

Diese Aufgabe wird erfindungsgemäß mit einem Verfahren gemäß den Merkmalen des Anspruches 1 gelöst.

Die weitere Ausgestaltung der Erfindung ist den Unteransprüchen zu entnehmen.

Erfindungsgemäß ist also ein Verfahren zur Beschickung mindestens eines Extruders mit mindestens einer Materialbahn, insbesondere aus Kautschuk- und/oder Kunststoffmischungen vorgesehen, wobei jeweils mittels eines Fördermittels die jeweilige Materialbahn, beabstandet zu mindestens einer Materialzuführung des jeweiligen Extruders, in den Bereich dieser Materialzuführung transportiert wird. Wesensgemäß wird mittels zumindest einer, zumindest ein Werkzeug aufweisenden Handhabungseinrichtung ein Anfangsbereich der jeweiligen Materialbahn von dem Fördermittel aufgenommen und bearbeitet und in die Materialzuführung des mindestens einen Extruders eingebracht. Hierbei bilden zumindest der mindestens eine Extruder, die jeweiligen Fördermittel sowie die zumindest eine Handhabungseinrichtung eine Fertigungsanlage. Prinzipiell kann somit eine oder auch mehrere Handhabungseinrichtungen, welche z. B. als Roboter, insbesondere als Industrieroboter, ausgebildet sein können an der Beschickung eines oder mehrerer Extruder beteiligt sein. Die Extruder können unter anderem als Schneckenextruder und/oder Co-Extruder ausgebildet sein. Angedacht ist, dass die Handhabungseinrichtung oder Handhabungseinrichtungen die über ein oder mehrere Fördermittel antransportierten Materialbahnen, oder auch Felle genannt, zumindest vom Fördermittel, beispielsweise ein Förderband, Gurtförderer oder Ähnliches, abheben und in die Materialzuführung des Extruders einbringen. Zudem kann mittels zumindest eines an der Handhabungseinrichtung angeordneten Werkzeuges die Materialbahn vor der Einbringung bearbeitet werden. Die Bearbeitung kann dabei so erfolgen, dass der der Materialzuführung zugewandte und beabstandet positionierte Anfangsbereich der Materialbahn nach der Bearbeitung in einem im Wesentlichen spitz zulaufenden Zustand vorliegt.

In unterschiedlichen Ausprägungen der Erfindung ist denkbar, dass beispielsweise einerseits eine einzelne Handhabungseinrichtung mehrere Extruder mit Materialbahnen beschickt, die über eine der Anzahl der Extruder oder Materialzuführungen eines Co-Extruders gleiche Anzahl an Fördermitteln in den Bereich der jeweiligen Materialzuführung transportiert werden. In einem solchen Fall wäre es ferner sinnvoll, die Handhabungseinrichtung höhenverstellbar auszuführen, um Materialbahnen, welche von Fördermitteln mit verschiedener Förderendhöhe antransportiert werden, aufzunehmen und/oder zu bearbeiten. Andererseits ist ebenso denkbar, dass jeweils eine Handhabungseinrichtung pro Extruder oder Materialzuführung eines Co-Extruders und Fördermittel verwendet wird.

Neben dieser Standardbeschickung besteht die Möglichkeit, dass im Falle einer Störung, wie einem Abriss der Materialbahn, der sich auf dem Fördermittel befindliche Anfang der restlichen Materialbahn durch die Handhabungseinrichtung erneut aufgenommen und in die Materialzuführung eingebracht wird.

Die Aufnahme des Anfangsbereiches einer jeweiligen Materialbahn kann in beiden Fällen z. B. mittels eines Saug- oder Vakuumgreifers erfolgen.

In einer besonders vorteilhaften Weiterbildung der Erfindung erfolgt bei einem Eindringen einer Person in einen die Fertigungsanlage umgebenden Sicherheitsbereich eine Abschaltung der Fertigungsanlage. Hierdurch ist es möglich, dass z. B. die Gestaltung der Materialzuführung geändert werden kann. Im Gegensatz zu einer querschnittsbeschränkten, lang ausgeführten Trichterform wäre es denkbar, mit geringeren Längen des Trichters zu arbeiten oder gar auf eine Trichterform zu verzichten und die Materialzufuhr so zu gestalten, dass eine Materialbahn gar ohne Bearbeitung, direkt in die Materialzufuhr einbringbar ist. Des Weiteren kann eine Gefährdung der eindringenden Person durch die Handhabungseinrichtung oder Handhabungseinrichtungen verhindert werden.

Eine darüber hinaus gewinnbringende Ausführungsform der Erfindung liegt darin begründet, dass eine Erkennung der Position des Anfangsbereiches der sich auf dem jeweiligen Fördermittel befindlichen Materialbahn erfolgt. Dies könnte mittels einer optischen Erfassung, z. B. durch eine Kamera, und einer nachgeschalteten Bildverarbeitungseinheit erfolgen, wodurch es ermöglicht wird, stets die aktuelle Position des Anfangsbereiches einer Materialbahn zu bestimmen, wodurch eine Regelung der Handhabungseinrichtung ermöglicht wird. Weiterhin wäre es möglich, auch abweichende Positionen einer Materialbahn zu bestimmen und diese mittels der Handhabungseinrichtung aufzunehmen und/oder zu bearbeiten.

Mit Vorteil behaftet stellt es sich zudem dar, wenn der Anfangsbereich der jeweiligen Materialbahn mittels eines Werkzeuges, insbesondere eines Schneidwerkzeuges, der Handhabungseinrichtung unter einem zur Längsrichtung der Materialbahn spitz verlaufenden Winkel angeschnitten wird. Denkbar ist hierbei, dass der Anfangsbereich der Materialbahn einseitig oder beidseitig angeschnitten wird, sodass sich eine Dreiecks- oder Trapezform mit einer kurzen Grundseite ergibt. Durch eine solche Gestaltung liegt der Anfangsbereich im Wesentlichen spitz zulaufend vor, was das Einbringen in die Materialzuführung erleichtert.

Als zudem praxisgerecht stellt es sich dar, wenn der Anfangsbereich der jeweiligen Materialbahn mittels eines Werkzeuges der Handhabungseinrichtung und/oder der Handhabungseinrichtung an sich kegelförmig eingerollt wird. Ein solch kegelförmiges Einrollen der Materialbahn erlaubt ebenso vorteilhaft ein erleichtertes Einbringen der Materialbahn in die Materialzuführung eines jeweiligen Extruders. Es ist hierbei denkbar, dass alleinig das an der Handhabungseinrichtung befindliche Werkzeug das Einrollen der Materialbahn vornimmt, dieses Einrollen durch eine Bewegung der Handhabungseinrichtung an sich durchgeführt, während z. B. die Materialbahn durch das Werkzeug lediglich gehalten wird oder aber auch eine Kombination aus Werkzeug und Bewegung der Handhabungseinrichtung das Einrollen bewirkt.

Eine weitere vorteilhafte Weiterbildung besteht darin, dass der Anfangsbereich der jeweiligen Materialbahn mittels eines Werkzeuges der Handhabungseinrichtung und/oder der Handhabungseinrichtung an sich gefaltet wird. Dies ergibt eine weitere Möglichkeit, das Einbringen der Materialbahn in die Materialzuführung eines jeweiligen Extruders zu vereinfachen. Die Faltung kann in ähnlicher Weise wie bereits beschrieben, eine Dreiecks- oder Trapezform des Anfangsbereiches der Materialbahn ergeben. Dabei ist es wiederum möglich, dass die Faltung mittels eines Werkzeuges allein, mittels Bewegungen der Handhabungseinrichtung oder einer Kombination daraus durchgeführt wird.

Erfolgt das Aufnehmen des Anfangsbereiches der jeweiligen Materialbahn mittels eines Werkzeuges, insbesondere eines Greifers der Handhabungseinrichtung in einer hierfür vorgesehenen Unterbrechung des jeweiligen Fördermittels, so ist dies dahingehend als gewinnbringend anzusehen, dass diese Unterbrechung den Aufnahmevorgang vereinfacht respektive ermöglicht. Aufgrund dieser Ausgestaltung könnte ein als Zwei- oder Mehrfingergreifer ausgebildetes Werkzeug Anwendung finden, was eine Alternative zur Verwendung eines Saug- oder Vakuumgreifers darstellt. Ein Zweifingergreifer könnte die Materialbahn in einfacher Art und Weise seitlich in der Unterbrechung aufnehmen, eine Bewegung eines Greiferfingers zwischen Materialbahn und Fördermittel wäre nicht notwendig. Die Unterbrechung stellt bezüglich des Transportes der Materialbahn kein Hindernis dar, da diese über eine ausreichende Steifigkeit verfügt, sodass ein Überqueren der Unterbrechung ohne Weiteres möglich ist.

Erfolgt darüber hinaus das Aufnehmen des Anfangsbereiches der jeweiligen Materialbahn mittels eines Werkzeuges, insbesondere eine Greifers der Handhabungseinrichtung, unter einem Winkel zur Längsrichtung der jeweiligen Materialbahn, ist dies als überaus zweckmäßig zu beurteilen. Die Aufnahme des Anfangsbereiches einer jeweiligen Materialbahn erfolgt somit nicht parallel oder orthogonal zu der Längsrichtung der Materialbahn. Bei der Verwendung eines Zwei- oder Mehrfingergreifers zur Aufnahme des Anfangsbereiches einer jeweiligen Materialbahn ist es hierdurch denkbar, dass die Aufnahme während des Antransportes, bei sich noch in Bewegung befindlicher Materialbahn, in einer flüssigen Bewegung erfolgen kann.

In einer zudem erfolgversprechenden Ausführungsform werden fehlerhafte und/oder mit Fremdkörpern verunreinigte Teilstücke der jeweiligen Materialbahn, welche durch eine Erkennungs- und Trennvorrichtung aus dem stoffschlüssigen Materialverbund der jeweiligen Materialbahn gelöst auf dem jeweiligen Fördermittel vorliegen, mittels eines Werkzeuges, insbesondere eines Greifers der Handhabungseinrichtung aus der Materialbahn entfernt. Somit können verunreinigte Teile der Materialbahn nicht in den Produktionsprozess gelangen und auf eine Separierung vor der Beschickung kann verzichtet werden, was zu einer Kosteneinsparung führt. Es wäre im Bereich des Möglichen, die Erkennungs- und Trennvorrichtung an einem jeweiligen Fördermittel anzuordnen, mittels welcher die fehlerhaften und/oder verunreinigten Teilstücke beispielsweise aus der Materialbahn ausgeschnitten werden. Die getrennten Teilstücke würden hiernach zunächst auf der Fördereinrichtung verweilen und anschließend aussortiert, z. B durch einen Greifer der Handhabungseinrichtung.

In diesem Zusammenhang ist es auch empfehlenswert, wenn fehlerhafte und/oder mit Fremdkörpern verunreinigte Teilstücke der jeweiligen Materialbahn mittels zumindest eines Werkzeuges, insbesondere einer Trenneinrichtung und/oder eines Greifers der Handhabungseinrichtung aus dem Materialverbund der jeweiligen Materialbahn herausgetrennt und aus der Materialbahn entfernt werden. Mittels einer solchen Vorgehensweise könnte auf eine zusätzliche Trenneinrichtung verzichtet werden, lediglich eine Erkennung fehlerhafter und/oder verunreinigter Teilstücke müsste erfolgen. Diese Teilstücke würden anschließend durch ein einzelnes Werkzeug oder getrennte Werkzeuge der Handhabungseinrichtung von der Materialbahn getrennt und aussortiert.

Eine Ausführungsform bei welcher aus der jeweiligen Materialbahn entfernte Teilstücke durch die Handhabungseinrichtung auf einem abtransportierenden Fördermittel abgelegt und mittels des abtransportierenden Fördermittels aus dem Sicherheitsbereich der Fertigungsanlage geleitet werden, ist dazu prädestiniert, dass ein kontinuierlich ablaufender Produktionsprozess stattfindet. Durch den Abtransport aus dem Sicherheitsbereich der Fertigungsanlage ist es nicht notwendig, dass eine Unterbrechung der Produktion erfolgt, damit eine Person in den Sicherheitsbereich gelangen und die Teilstücke manuell entfernen kann. Ein solches Fördermittel kann beispielsweise ebenso als ein Förderband ausgebildet sein.

Erfolgt ferner das Einbringen des bearbeiteten Anfangsbereiches einer jeweiligen Materialbahn in die Materialzuführung eines jeweiligen Extruders kraftgesteuert oder kraftgeregelt, so kann weitgehend ausgeschlossen werden, dass eine übermäßige Beschickung der Materialzufuhr eines Extruders durch die Handhabungseinrichtung erfolgt. Unter anderem wäre es vorteilhaft möglich, dass eine Erkennung eines noch nicht vollständig verarbeiteten, sich zumindest teilweise noch in der Materialzuführung des Extruders befindlichen Endes einer Materialbahn erfolgt und somit beispielsweise ein Materialstau in der Materialzuführung verhindert wird.

Es ist zudem als sinnvoll zu erachten, dass durch das den Anfangsbereich einer jeweiligen Materialbahn aufnehmende Werkzeug, insbesondere eines Rollengreifers der Handhabungseinrichtung lediglich ein in Einführrichtung der Materialzuführung gerichteter Vorschub der Materialbahn ermöglicht wird, wodurch gewinnbringend der Rücklauf der aufgenommenen Materialbahn verhindert werden kann. Eine Störung, wie eine Kollision einer rücklaufenden Materialbahn mit einer neu zugeführten Materialbahn könnte hierdurch verhindert werden.

Eine besonders vorteilhafte Weiterbildung liegt ferner darin, dass in Abhängigkeit eines durchzuführenden Prozessschrittes ein Wechsel des zumindest einen Werkzeuges der Handhabungseinrichtung erfolgt. Ein Prozessschritt kann dabei beispielsweise das Aufnehmen und/oder Bearbeiten und Einbringen des Anfangsbereiches der jeweiligen Materialbahn in die Materialzuführung oder das Trennen, Entfernen und/oder Ablegen von Teilstücken der Materialbahn umfassen. Es ist dabei als praxisgerecht anzusehen, dass die Handhabungseinrichtung dazu eine Werkzeugaufnahme aufweist, welche abwechselnd mit verschiedenen Werkzeugen ausgestattet werden kann, wobei die Werkzeuge in einem abseits der Handhabungseinrichtung angeordneten Werkzeugwechsler bevorratet werden. Denkbar ist jedoch ebenso, dass die Werkzeugaufnahme als ein Werkzeugrevolver ausgebildet ist, in welchem bereits mehrere Werkzeuge angeordnet sind.

Empfehlenswert ist es außerdem, wenn die Handhabungseinrichtung eingelernte Bewegungsabläufe durchführt oder eine manuelle Bedienung der Handhabungseinrichtung erfolgt. Die eingelernten Bewegungen können dabei Standard-Bewegungsabläufe darstellen, d. h. Bewegungsabläufe, welche im Regelfall der Beschickung durch die Handhabungseinrichtung durchgeführt werden, oder solche Störungs-Bewegungsabläufe beinhalten, wie sie sich im Falle einer Störung, beispielsweise dem Abriss einer Materialbahn ergeben. Neben diesen eingelernten Bewegungsabläufen sollte die Möglichkeit bestehen, eine Handhabungseinrichtung manuell zu bedienen, um z. B. eine durch die eingelernten Bewegungsabläufe nicht abgedeckte Störung zu beheben oder eine sonstige notwendige Fehlerkorrektur zu ermöglichen. Hierfür kann es als sinnvoll erachtet werden, dass mittels eines optischen Systems, wie einer Kamera, die Bewegungen der Handhabungseinrichtung oder -einrichtungen übertragen und eine Fernsteuerung, beispielhaft mittels eines Joysticks, aus einem Bereich außerhalb des Sicherheitsbereiches erfolgt.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
Fig. 1 eine Anordnung zur Durchführung des erfindungsgemäßen Verfahrens;
Fig. 2 eine Darstellung der Fertigungsanlage;
Fig. 3 ein Förderband mit Unterbrechung;
Fig. 4 Darstellungen von Materialbahnen.

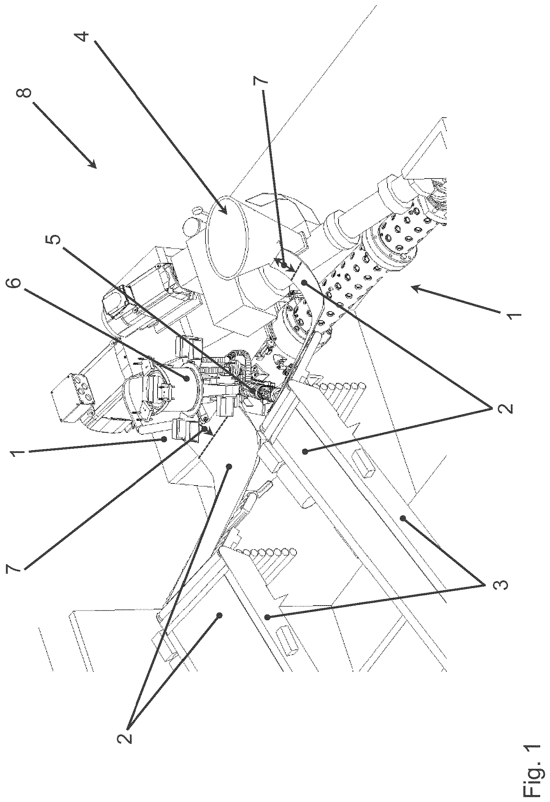

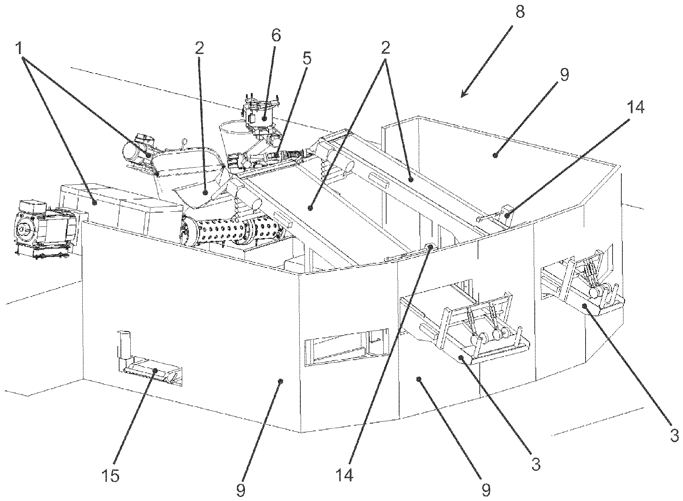

Figur 1 zeigt eine mögliche Anordnung bei der Durchführung des erfindungsgemäßen Verfahrens. Dargestellt ist ein als Co-Extruder ausgebildeter Extruder 1, welcher zwei Materialzuführungen 4 aufweist. In diese Materialzuführungen 4 wurden mittels des als Rollengreifer ausgebildeten Werkzeuges 5 der als Roboter ausgebildeten Handhabungseinrichtung 6 die Anfangsbereiche 7 der Materialbahnen 2 eingebracht, wobei diese zunächst von den Fördermitteln 3 aufgenommen und bearbeitet wurden. Es ist anzumerken, dass durch das als Rollengreifer ausgeprägte Werkzeug 5 lediglich ein in Einführrichtung der Materialzuführung 4 gerichteter Vorschub der Materialbahn 2 ermöglicht wird. Diese Materialbahnen 2 wurden in einem vorhergehenden Schritt mit den als Förderbändern ausgeprägten Fördermitteln 3 beabstandet zu den Materialzuführungen 4 in den Bereich dieser Materialzuführungen 4 transportiert. Der Extruder 1, die jeweiligen Fördermittel 3 sowie die Handhabungseinrichtung 6 bilden hierbei die Fertigungsanlage 8.

Figur 2 zeigt eine Darstellung der Fertigungsanlage 8 mit dem Extruder 1 sowie der Handhabungseinrichtung 6 und vier Fördermitteln 3. Die Fördermittel 3 sind jeweils mit einer zugehörigen Erkennungs- und Trenneinrichtung 14 versehen. Zudem ist der die Fertigungsanlage 8 umgebende Sicherheitsbereich 9 gekennzeichnet. Das abtransportierende Fördermittel 15, welches als ein Förderband ausgebildet ist, ist so angeordnet, dass es sich teilweise im Sicherheitsbereich 9, teilweise außerhalb des Sicherheitsbereiches 9 befindet. Durch diese Anordnung wird es ermöglicht, durch die jeweiligen Erkennungs- und Trenneinrichtungen 14 aus dem stoffschlüssigen Materialverbund der jeweiligen Materialbahnen 2 herausgetrennte Teilstücke aus dem Sicherheitsbereich 9 zu entfernen. Die herausgetrennten Teilstücke der jeweiligen Materialbahnen 2 werden hierfür mittels des als Greifer ausgebildeten Werkzeuges 5 der Handhabungseinrichtung 6 aufgenommen und auf dem abtransportierenden Fördermittel 15 abgelegt.

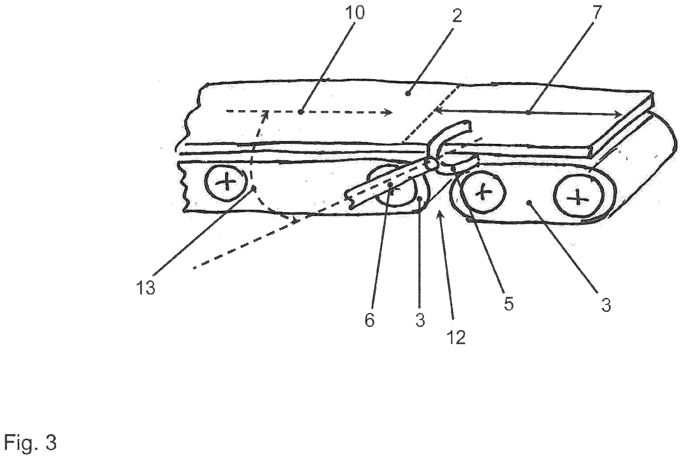

In Figur 3 ist ein als Förderband ausgeprägtes Fördermittel 3 dargestellt, wobei das Aufnehmen des Anfangsbereiches 7 der Materialbahn 2 mittels des als Zweifingergreifers ausgebildeten Werkzeuges 5 der Handhabungseinrichtung 6 in der dafür vorgesehenen Unterbrechung 12 des Fördermittels 3 unter dem Winkel 13 zur Längsrichtung 10 der Materialbahn 2 erfolgt.

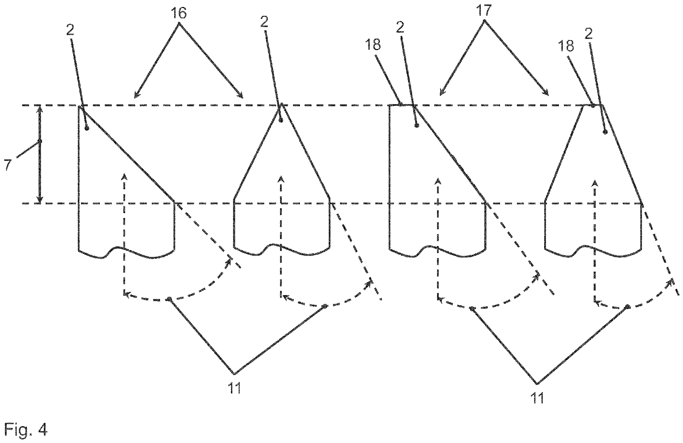

Figur 4 zeigt vier Materialbahnen 2, bei welchen der Anfangsbereich 7 der jeweiligen Materialbahn 2 unter einem zur Längsrichtung 10 der Materialbahn 2 spitz verlaufenden Winkel 11 angeschnitten ist. Die Anfangsbereiche 7 der Materialbahnen 2 sind einseitig oder beidseitig angeschnitten, sodass sich eine Dreiecksform 16 oder Trapezform 17 mit einer kurzen Grundseite 18 ergibt. Durch eine solche Gestaltung liegen die Anfangsbereiche 7 der Materialbahnen 2 im Wesentlichen spitz zulaufend vor.

### BEZUGSZEICHENLISTE

- 1: Extruder
- 2: Materialbahn
- 3: Fördermittel
- 4: Materialzuführung
- 5: Werkzeug

- 6: Handhabungseinrichtung
- 7: Anfangsbereich
- 8: Fertigungsanlage
- 9: Sicherheitsbereich
- 10: Längsrichtung

- 11: Winkel
- 12: Unterbrechung
- 13: Winkel
- 14: Erkennungs- und Trenneinrichtung
- 15: Fördermittel

- 16: Dreiecksform
- 17: Trapezform
- 18: Grundseite

## Patentansprüche

1. Verfahren zur Beschickung mindestens eines Extruders (1) mit mindestens einer Materialbahn (2), insbesondere aus Kautschuk- und/oder Kunststoffmischungen, wobei jeweils mittels eines Fördermittels (3) die jeweilige Materialbahn (2), beabstandet zu mindestens einer Materialzuführung (4) des jeweiligen Extruders (1), in den Bereich dieser Materialzuführung (4) transportiert wird, wobei zumindest der mindestens eine Extruder (1), die jeweiligen Fördermittel (3) sowie zumindest eine zumindest ein Werkzeug (5) aufweisende Handhabungseinrichtung (6) eine Fertigungsanlage (8) bilden, **dadurch gekennzeichnet, dass** mittels eines Werkzeuges in Form eines Greifers, der zumindest einen Handhabungseinrichtung (6) ein Anfangsbereich (7) der jeweiligen Materialbahn (2) von dem Fördermittel (3) aufgenommen, hierbei vom Fördermittel (3) abgehoben, und bearbeitet und in die Materialzuführung (4) des mindestens einen Extruders (1) eingebracht wird.

2. Verfahren nach Anspruch 1, **dadurch gekennzeichnet, dass** bei einem Eindringen einer Person in einen die Fertigungsanlage (8) umgebenden Sicherheitsbereich (9) eine Abschaltung der Fertigungsanlage (8) erfolgt.

3. Verfahren nach den Ansprüchen 1 oder 2, **dadurch gekennzeichnet, dass** eine Erkennung der Position des Anfangsbereiches (7) der sich auf dem jeweiligen Fördermittel (3) befindlichen Materialbahn (2) erfolgt.

4. Verfahren nach zumindest einem der vorhergehenden Ansprüche, **dadurch gekennzeichnet, dass** der Anfangsbereich (7) der jeweiligen Materialbahn (2) mittels eines Werkzeuges (5), insbesondere eines Schneidwerkzeuges der Handhabungseinrichtung (6) unter einem zur Längsrichtung (10) der Materialbahn (2) spitz verlaufenden Winkel (11) angeschnitten wird.

5. Verfahren nach zumindest einem der vorhergehenden Ansprüche, **dadurch gekennzeichnet, dass** der Anfangsbereich (7) der jeweiligen Materialbahn (2) mittels eines Werkzeuges (5) der Handhabungseinrichtung (6) und/oder der Handhabungseinrichtung (6) an sich kegelförmig eingerollt wird.

6. Verfahren nach zumindest einem der vorhergehenden Ansprüche, **dadurch gekennzeichnet, dass** der Anfangsbereich (7) der jeweiligen Materialbahn (2) mittels eines Werkzeuges (5) der Handhabungseinrichtung (6) und/oder der Handhabungseinrichtung (6) an sich gefaltet wird.

7. Verfahren nach zumindest einem der vorhergehenden Ansprüche, **dadurch gekennzeichnet, dass** das Aufnehmen des Anfangsbereiches (7) der jeweiligen Materialbahn (2) mittels des Greifers der Handhabungseinrichtung (6) in einer hierfür vorgesehenen Unterbrechung (12) des jeweiligen Fördermittels (3) erfolgt.

8. Verfahren nach zumindest einem der vorhergehenden Ansprüche, **dadurch gekennzeichnet, dass** das Aufnehmen des Anfangsbereiches (7) der jeweiligen Materialbahn (2) mittels des Greifers der Handhabungseinrichtung (6) unter einem Winkel (13) zur Längsrichtung (10) der jeweiligen Materialbahn (2) erfolgt.

9. Verfahren nach zumindest einem der vorhergehenden Ansprüche, **dadurch gekennzeichnet, dass** fehlerhafte und/oder mit Fremdkörpern verunreinigte Teilstücke der jeweiligen Materialbahn, welche durch eine Erkennungs- und Trennvorrichtung (14) aus dem stoffschlüssigen Materialverbund der jeweiligen Materialbahn (2) gelöst auf dem jeweiligen Fördermittel (3) vorliegen, mittels des Greifers der Handhabungseinrichtung (6) aus der Materialbahn (2) entfernt werden.

10. Verfahren nach zumindest einem der vorhergehenden Ansprüche, **dadurch gekennzeichnet, dass** fehlerhafte und/oder mit Fremdkörpern verunreinigte Teilstücke der jeweiligen Materialbahn (2) mittels zumindest eines Werkzeuges (5), insbesondere einer Trenneinrichtung und/oder des Greifers der Handhabungseinrichtung (6) aus dem Materialverbund der jeweiligen Materialbahn (2) herausgetrennt und aus der Materialbahn (2) entfernt werden.

11. Verfahren nach zumindest einem der vorhergehenden Ansprüche, **dadurch gekennzeichnet, dass** aus der jeweiligen Materialbahn (2) entfernte Teilstücke durch die Handhabungseinrichtung (6) auf einem abtransportierenden Fördermittel (15) abgelegt und mittels des abtransportierenden Fördermittels (15) aus dem Sicherheitsbereich (9) der Fertigungsanlage (8) geleitet werden.

12. Verfahren nach zumindest einem der vorhergehenden Ansprüche, **dadurch gekennzeichnet, dass** das Einbringen des bearbeiteten Anfangsbereiches (7) einer jeweiligen Materialbahn (2) in die Materialzuführung (4) eines jeweiligen Extruders (1) kraftgesteuert oder kraftgeregelt erfolgt.

13. Verfahren nach zumindest einem der vorhergehenden Ansprüche, **dadurch gekennzeichnet, dass** durch den den Anfangsbereich (7) einer jeweiligen Materialbahn (2) aufnehmenden Greifer der Handhabungseinrichtung (6) lediglich ein in Einführrichtung der Materialzuführung (4) gerichteter Vorschub der Materialbahn (2) ermöglicht wird.

14. Verfahren nach zumindest einem der vorhergehenden Ansprüche, **dadurch gekennzeichnet, dass** in Abhängigkeit eines durchzuführenden Prozessschrittes ein Wechsel des zumindest einen Werkzeuges (5) der Handhabungseinrichtung (6) erfolgt.

15. Verfahren nach zumindest einem der vorhergehenden Ansprüche, **dadurch gekennzeichnet, dass** das Handhabungseinrichtung (6) eingelernte Bewegungsabläufe durchführt oder eine manuelle Bedienung der Handhabungseinrichtung (6) erfolgt.

## Claims

1. Process for charging at least one extruder (1) with at least one web of material (2), more specifically of rubber and/or plastic mixtures, wherein the particular material web (2), which is at a distance from at least one material feed (4) of the particular extruder (1), is transported to the area of said material feed (4) in each case by using a conveying means (3), wherein at least the at least one extruder (1), the particular conveying means (3), and at least one handling equipment (6) having at least one tool (5) form a production line (8), **characterized in that**, by means of a tool in the shape of a gripper of the at least one handling equipment (6), a leading section (7) of the particular material web (2) is received by the conveying means (3), thereby lifted by the conveying means (3), and processed and introduced to the material feed (4) of the at least one extruder (1).

2. Process according to Claim 1, **characterized in that** the production line (8) is shut down upon a person entering a safety zone (9) surrounding said production line (8).

3. Process according to Claims 1 or 2, **characterized in that** the position of the leading section (7) of the material web (2) present on the particular conveying means (3) is recognised.

4. Process according to at least one of the preceding claims, **characterized in that** the leading section (7) of the particular material web (2) is cut using a tool (5), more specifically a cutting tool, of the handling equipment (6) at an acute angle to the longitudinal direction (10) of the material web (2).

5. Process according to at least one of the preceding claims, **characterized in that** the leading section (7) of the particular material web (2) is rolled up in a conical fashion using a tool (5) of the handling equipment (6) and/or the handling equipment (6) per se.

6. Process according to at least one of the preceding claims, **characterized in that** the leading section (7) of the particular material web (2) is folded using a tool (5) of the handling equipment (6) and/or the handling equipment (6) per se.

7. Process according to at least one of the preceding claims, **characterized in that** the leading section (7) of the particular material web (2) is received using the gripper of the handling equipment (6) in a gap designed for this purpose (12) of the particular conveying means (3).

8. Process according to at least one of the preceding claims, **characterized in that** the leading section (7) of the particular material web (2) is received using the gripper of the handling equipment (6) at an angle (13) to the longitudinal direction (10) of the material web (2).

9. Process according to at least one of the preceding claims, **characterized in that** parts of the particular material web (2) that are faulty and/or contaminated by foreign bodies and which are present on the particular conveying means (3), after having been removed from the integral material composite of the particular material web (2) by a recognizing and separating device (14), are removed by the gripper of the handling equipment (6) from the material web (2).

10. Process according to at least one of the preceding claims, **characterized in that** parts of the particular material web (2) that are faulty and/or contaminated by foreign bodies are separated from the material composite of the particular material web (2) and removed from the material web (2) using at least one tool (5), in particular a separating equipment and/or the gripper of the handling equipment (6).

11. Process according to at least one of the preceding claims, **characterized in that** parts removed from the particular material web (2) are deposited by the handling equipment (6) on an exporting conveying means (15) and led out of the safety zone (9) of the production line (8) using the exporting conveying means (15) .

12. Process according to at least one of the preceding claims, **characterized in that** introducing the processed leading section (7) of a particular material web (2) to the material feed (4) of a particular extruder (1) is force-controlled or force-regulated.

13. Process according to at least one of the preceding claims, **characterized in that** the gripper of the handling equipment (6) receiving the leading section (7) of a particular material web (2) enables the material web (2) to be fed only in the import direction of the material feed (4).

14. Process according to at least one of the preceding claims, **characterized in that** the at least one tool (5) of the handling equipment (6) is changed as a function of a process step to be carried out.

15. Process according to at least one of the preceding claims, **characterized in that** the handling equipment (6) carries out learned motions or the handling equipment (6) is operated manually.

## Revendications

1. Procédé de chargement d'au moins une extrudeuse (1) avec au moins une bande de matériau (2), notamment en mélanges de caoutchouc et/ou de matière plastique, la bande de matériau (2) respective étant transportée à chaque fois au moyen d'un moyen d'acheminement (3), à distance d'au moins une amenée de matériau (4) de l'extrudeuse (1) respective, dans la zone de cette amenée de matériau (4), au moins l'au moins une extrudeuse (1), les moyens d'acheminement (3) respectifs ainsi qu'au moins un appareil de manipulation (6) présentant au moins un outil (5) formant une installation de fabrication (8), **caractérisé en ce qu'**au moyen d'un outil sous la forme d'un préhenseur, de l'au moins un appareil de manipulation (6), une zone initiale (7) de la bande de matériau (2) respective est reçue par le moyen d'acheminement (3), est ainsi soulevée du moyen d'acheminement (3), et est traitée et introduite dans l'amenée de matériau (4) de l'au moins une extrudeuse (1) .

2. Procédé selon la revendication 1, **caractérisé en ce qu'**en cas d'intrusion d'une personne dans une zone de sécurité (9) entourant l'installation de fabrication (8), une mise hors service de l'installation de fabrication (8) a lieu.

3. Procédé selon la revendication 1 ou 2, **caractérisé en ce qu'**une détection de la position de la zone initiale (7) de la bande de matériau (2) se trouvant sur le moyen d'acheminement (3) respectif a lieu.

4. Procédé selon au moins l'une quelconque des revendications précédentes, **caractérisé en ce que** la zone initiale (7) de la bande de matériau (2) respective est entamée au moyen d'un outil (5), notamment d'un outil de coupe de l'appareil de manipulation (6), selon un angle (11) s'étendant de manière aigue par rapport à la direction longitudinale (10) de la bande de matériau (2).

5. Procédé selon au moins l'une quelconque des revendications précédentes, **caractérisé en ce que** la zone initiale (7) de la bande de matériau (2) respective est enroulée en forme de cône sur elle-même au moyen d'un outil (5) de l'appareil de manipulation (6) et/ou de l'appareil de manipulation (6).

6. Procédé selon au moins l'une quelconque des revendications précédentes, **caractérisé en ce que** la zone initiale (7) de la bande de matériau (2) respective est pliée sur elle-même au moyen d'un outil (5) de l'appareil de manipulation (6) et/ou de l'appareil de manipulation (6).

7. Procédé selon au moins l'une quelconque des revendications précédentes, **caractérisé en ce que** la réception de la zone initiale (7) de la bande de matériau (2) respective au moyen du préhenseur de l'appareil de manipulation (6) a lieu dans une interruption (12) prévue à cet effet du moyen d'acheminement (3) respectif.

8. Procédé selon au moins l'une quelconque des revendications précédentes, **caractérisé en ce que** la réception de la zone initiale (7) de la bande de matériau (2) respective au moyen du préhenseur de l'appareil de manipulation (6) a lieu selon un angle (13) par rapport à la direction longitudinale (10) de la bande de matériau (2) respective.

9. Procédé selon au moins l'une quelconque des revendications précédentes, **caractérisé en ce que** des parties défectueuses et/ou contaminées par des corps étrangers de la bande de matériau respective, qui sont présentes sur le moyen d'acheminement (3) respectif en étant détachées par un dispositif de détection et de séparation (14) du matériau composite à liaison de matière de la bande de matériau (2) respective, sont retirées de la bande de matériau (2) au moyen du préhenseur de l'appareil de manipulation (6).

10. Procédé selon au moins l'une quelconque des revendications précédentes, **caractérisé en ce que** des parties défectueuses et/ou contaminées par des corps étrangers de la bande de matériau (2) respective sont séparées du matériau composite de la bande de matériau (2) respective au moyen d'au moins un outil (5), notamment d'un appareil de séparation et/ou du préhenseur de l'appareil de manipulation (6) et sont retirées de la bande de matériau (2).

11. Procédé selon au moins l'une quelconque des revendications précédentes, **caractérisé en ce que** des parties retirées de la bande de matériau (2) respective sont déposées par l'appareil de manipulation (6) sur un moyen d'acheminement d'évacuation (15) et sont conduites hors de la zone de sécurité (9) de l'installation de fabrication (8) au moyen du moyen d'acheminement d'évacuation (15).

12. Procédé selon au moins l'une quelconque des revendications précédentes, **caractérisé en ce que** l'introduction de la zone initiale traitée (7) d'une bande de matériau (2) respective dans l'amenée de matériau (4) d'une extrudeuse (1) respective a lieu de manière commandée par la force ou régulée par la force.

13. Procédé selon au moins l'une quelconque des revendications précédentes, **caractérisé en ce que** le préhenseur de l'appareil de manipulation (6) recevant la zone initiale (7) d'une bande de matériau (2) respective permet uniquement une avance de la bande de matériau (2) orientée dans la direction d'introduction de l'amenée de matériau (4).

14. Procédé selon au moins l'une quelconque des revendications précédentes, **caractérisé en ce qu'**un changement de l'au moins un outil (5) de l'appareil de manipulation (6) a lieu en fonction d'une étape de processus à exécuter.

15. Procédé selon au moins l'une quelconque des revendications précédentes, **caractérisé en ce que** l'appareil de manipulation (6) exécute des séquences de mouvements apprises ou une commande manuelle de l'appareil de manipulation (6) a lieu.
